Europäisches Patentamt

European Patent Office

Office européen des brevets

(19)

(11) EP 0 833 433 A1

(12) DEMANDE DE BREVET EUROPEEN

(43) Date de publication:
01.04.1998 Bulletin 1998/14

(51) Int Cl.6: H02P 6/08

(21) Numéro de dépôt: 97402260.0

(22) Date de dépôt: 29.09.1997

(84) Etats contractants désignés:
AT BE CH DE DK ES FI FR GB GR IE IT LI LU MC NL PT SE

(30) Priorité: 30.09.1996 FR 9611897

(71) Demandeur: VALEO ELECTRONIQUE
94000 Creteil (FR)

(72) Inventeur: Permuy, Alfred
92500 Rueil-Malmaison (FR)

(74) Mandataire: Le Forestier, Eric
Cabinet Regimbeau,
26, avenue Kléber
75116 Paris (FR)

(54) Procédé et dispositif pour la commande d'un moteur électrique synchrone, notamment d'un groupe motoventilateur de véhicule automobile

(57) Dispositif de commande de groupe motoventilateur de véhicule automobile dans lequel les différents bobinages d'induit ($B_1$ à $B_3$) qui correspondent aux différentes phases sont alimentées par des générateurs ($GI_1$ à $GI_3$) de courant recevant en entrée des signaux de consigne, tels que le vecteur défini par les intensités des courants générés par lesdits générateurs de courant ($GI_1$ à $GI_3$) est proportionnel au vecteur $\vec{V}$-$Z\vec{I}$, où $\vec{V}$ est un vecteur défini par les différentes tensions ($V_1$ à $V_3$) mesurées pour les différents bobinages, $\vec{I}$ un vecteur défini par les différentes intensités de courant ($I_1$ à $I_3$) mesurées pour les différents bobinages ($B_1$ à $B_3$), et $Z$ un opérateur correspondant à l'impédance des bobinages ($B_1$ à $B_3$).

FIG_1

## Description

La présente invention est relative aux procédés et aux dispositifs pour la commande de l'alimentation d'un moteur électrique synchrone, notamment de groupe motoventilateur (GMV) de véhicule automobile.

Les moteurs électriques synchrones des groupes GMV nécessitent des puissances importantes, en même temps que des rendements élevés.

Compte tenu du confinement de ces moteurs sous le capot du véhicule, il n'est pas possible d'admettre pour de tels moteurs et leur commande des pertes calorifiques trop importantes.

Un but de l'invention est de réduire considérablement les pertes calorifiques de ces moteurs.

On sait que la puissance mécanique d'un moteur électrique est donnée par $P_{Mec} = \vec{E} \cdot \vec{I}$ et que les pertes joules sont quant à elles données par $P_T = RI^2$ où $\vec{E}$ est un vecteur dont les différentes composantes correspondent aux forces contre électromotrices dans les différents bobinages de l'induit du moteur, et où $\vec{I}$ est un vecteur dont les différentes composantes correspondent aux intensités de courant dans ces différents bobinages. Par $\vec{E}.\vec{I}$, on entend :

$$\vec{E} \cdot \vec{I} = \sum_{i=1}^{n} \lim_{(T \to +\infty)} \frac{1}{T} \int E_i(t).I_i(t)\, dt$$

avec n le nombre de phases du moteur et T la période des signaux de commande.

Pour une puissance $P_{Mec}$ donnée, les pertes $P_T$ sont minimisées si $\vec{E}$ et $\vec{I}$ sont proportionnels.

Une solution à laquelle l'Homme du Métier pourrait penser pour rendre $\vec{E}$ et $\vec{I}$ proportionnels serait d'imposer aux différents bobinages des courants d'alimentation présentant des lois de variation prédéterminées analogues à celles des forces contre-électromotrices connues a priori et de synchroniser cette alimentation sur la rotation du rotor.

Toutefois, cette solution ne serait pas optimale. Les lois de variations des forces contre-électromotrices évoluent de façon significative dans le temps, notamment du fait des dérives thermiques des ferrites du moteur ou encore des réactions d'induit qui déforment lesdites forces contre-électromotrices. Elles varient également de façon significative d'un moteur à l'autre ou encore d'un bobinage à l'autre. De ce fait, les lois de variations théoriques que l'on pourrait imposer aux courants des bobinages ne peuvent qu'être approximatives et conduire à des pertes thermiques non optimisées.

En outre, cette solution présenterait l'inconvénient de nécessiter une électronique de synchronisation.

L'invention propose quant à elle un dispositif de commande d'un moteur électrique, notamment de groupe motoventilateur de véhicule automobile, présentant plusieurs phases, caractérisé en ce que les différents bobinages d'induit qui correspondent à ces différentes phases sont alimentées par des générateurs de courant et en ce que pour la commande de ces générateurs de courant, il comporte des moyens pour la mesure des tensions aux bornes de ces différents bobinages, des moyens pour la mesure des intensités des courants qui traversent ces différents bobinages, et des moyens pour la détermination, en fonction de ces mesures, de signaux de consigne appliqués aux entrées de commande des générateurs de courant, tels que le vecteur défini par les intensités des courants générés par lesdits générateurs de courant est proportionnel au vecteur $\vec{V}$-$Z\vec{I}$, où $\vec{V}$ est un vecteur défini par les différentes tensions mesurées pour les différents bobinages, $\vec{I}$ un vecteur défini par les différentes intensités de courant mesurées pour les différents bobinages, et Z un opérateur correspondant à l'impédance des bobinages.

Avec une telle commande, le vecteur $\vec{E}$, qui comme on le comprendra dans la suite du texte correspond sensiblement à $\vec{V}$-$Z\vec{I}$, est maintenu proportionnel à $\vec{I}$.

Les pertes joules sont par conséquent minimisées, pour une puissance mécanique donnée.

En outre, aucune électronique de synchronisation n'est nécessaire.

Un tel dispositif est avantageusement complété par les différentes caractéristiques suivantes prises seules ou selon toutes leurs combinaisons techniquement possibles :

- il comporte des moyens pour asservir à un paramètre donné le coefficient de proportionnalité entre le vecteur constitué par les différentes intensités des courants générés par les générateurs et le vecteur $\vec{V}$-$Z\vec{I}$ ;
- il comporte des moyens pour asservir ce coefficient de proportionnalité en fonction de la vitesse du rotor du moteur ;
- dans le cas où les bobinages sont montés en étoile, leur noeud commun est relié à un point neutre par l'intermédiaire d'une impédance ;
- dans le cas où les bobinages sont montés en étoile, les signaux de consigne sont corrigés par un signal correspondant à l'intensité du courant en sortie des bobinages, au niveau du noeud commun auxdits bobinages, les boucles de réaction ainsi réalisées permettant de maintenir ladite intensité de courant au voisinage d'une valeur nulle ;
- dans le cas où les bobinages sont montés en étoile, les moyens pour la mesure des intensités des courants qui traversent les différents bobinages sont situés sur les branches des différents bobinages du côté opposé aux générateurs de courant ;

- les moyens pour la détermination des signaux de consigne comportent des amplificateurs opérationnels, qui constituent des opérateurs différentiels et un sommateur ;
- les moyens pour la mesure des tensions aux bornes des bobinages comportent des amplificateurs différentiels ;
- les moyens pour la mesure des intensités des courants qui traversent les bobinages comportent des dérivations de type shunt aux bornes desquelles une tension représentative du courant est mesurée, ou encore des sondes effet Hall.

D'autres caractéristiques et avantages de l'invention ressortiront encore de la description qui suit. Cette description est purement illustrative et non limitative. Elle doit être lue en regard des dessins annexés sur lesquels :

- la figure 1 représente schématique un dispositif de commande conforme à un mode de réalisation possible, dans le cas d'un montage en étoile des bobines de l'induit du moteur ;
- la figure 2 est une représentation schématique d'un montage en triangle équivalent au montage en étoile du dispositif de la figure 1 ;
- la figue 3 illustre un montage permettant d'asservir la quantité $\frac{1}{n} \Sigma$ Vi, dans le cas du montage en triangle de la figure 2.

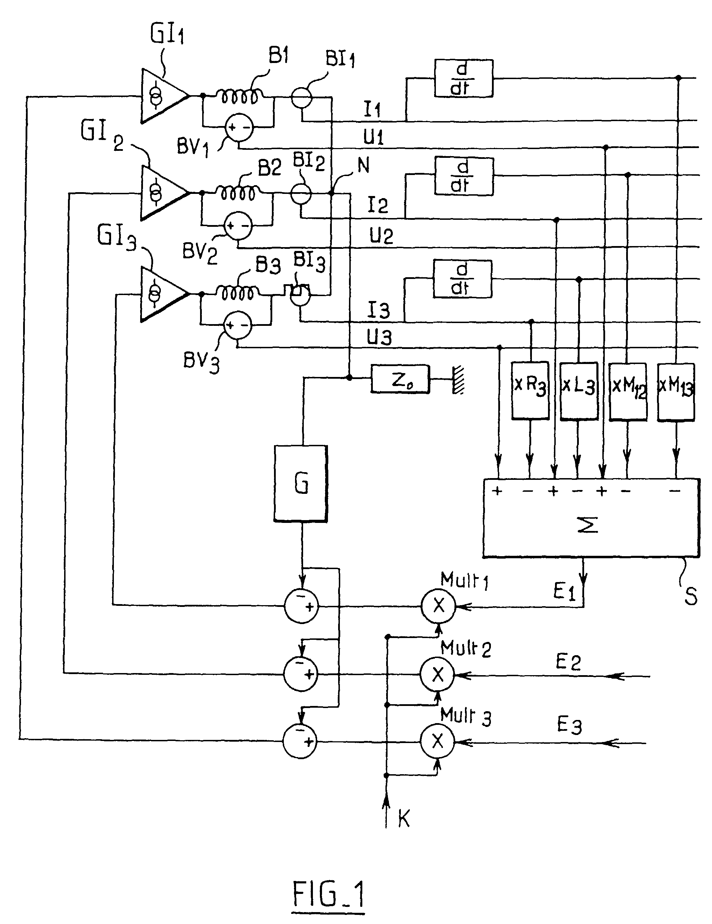

Sur la figure 1, on a représenté les bobinages $B_1$, $B_2$, $B_3$ d'un induit d'un moteur triphasé. Dans cet exemple, les bobinages $B_1$ à $B_3$ sont montés en étoile.

Chacun de ces bobinages est alimenté par un générateur de courant $GI_1$, $GI_2$ et $GI_3$. Lesdits générateurs $GI_1$ à $GI_3$ sont reliés aux extrémités desdits bobinages $B_1$ à $B_3$ opposées à leur noeud commun, référencé par N sur la figure 1.

Le dispositif de commande de l'alimentation de ce moteur comporte sur chacune des branches de ces bobinages $B_1$ à $B_3$ des moyens référencés par $BI_1$, $BI_2$, $BI_3$ pour la mesure de l'intensité $I_1$, $I_2$, $I_3$ du courant circulant dans chacune de ces différentes branches.

Dans le cas d'un montage étoile, les moyens $BI_1$ à $BI_3$ sont par exemple constitués par des dérivations de type shunt aux bornes desquelles une tension représentative du courant est mesurée, ou encore par des sondes effet Hall.

Ces moyens $BI_1$ à $BI_3$ de mesure de courant sont avantageusement disposés sur les branches de ces bobinages $B_1$ à $B_3$ du côté opposé aux générateurs $GI_1$ à $GI_3$.

Dans le cas où les générateurs de courant haché génèrent un courant, les courants lus par ces moyens $BI_1$ à $BI_3$ ne sont pas perturbés par les variations générées par le hachage de courant.

En outre, le noeud N commun aux différents bobinages étant à la tension neutre, ceci permet de mesurer les courants par des moyens de type shunt en des points dont la tension est proche de celle du neutre.

Il est également prévu des moyens $BV_1$ à $BV_3$ montés en parallèle sur les bobinages $B_1$ à $B_3$ pour la mesure des tensions $V_1$ à $V_3$ aux bornes de ces bobinages.

Les mesures de courant $I_1$ à $I_3$ sont envoyées sur les opérateurs différentiels et des multiplicateurs (amplificateurs), dont les sorties sont elles-mêmes envoyées, avec les mesures de tension $V_1$ à $V_3$ sur une unité de sommation S.

Ces opérateurs et cette unité de sommation sont tels que les trois sorties $E_1$, $E_2$, $E_3$ correspondent à un vecteur $\vec{E}$ tel que :

$$\vec{E} = \vec{V} - Z\vec{I}$$

où Z est un opérateur qui correspond à l'impédance des bobinages, c'est-à-dire à la fonction

$$R_i + L_i \, d/dt + M_{ij} \, d/dt$$

où $R_i$ et $L_i$ sont les coefficients de résistance et d'inductance de la branche i, et où les coefficients $M_{ij}$ sont les coefficients d'induction mutuelle des branches i et j.

Les opérateurs différentiels d/dt et le sommateur S sont avantageusement réalisés par des amplificateurs opérationnels, la mesure de la tension aux bornes de chacune des phases étant réalisée par des amplificateurs différentiels.

Du fait de son faible coût, une telle configuration est préférée à une solution numérique.

Les trois sorties $E_1$, $E_2$, $E_3$ du sommateur sont ensuite envoyées sur des multiplicateurs $Mult_1$ à $Mult_3$, au niveau desquels elles sont multipliées chacune par un même coefficient K. Les signaux en sortie des multiplicateurs $Mult_1$ à $Mult_3$ sont utilisés comme signaux de consigne pour la commande respectivement des générateurs de courant $GI_1$ à $GI_3$ dont la sortie alimente les bobinages $B_1$ à $B_3$, les intensités de courant $I_1$ à $I_3$ générées étant proportionnelles à ces signaux de consigne.

Le coefficient K est le paramètre qui règle la vitesse du moteur électrique.

Sa valeur est par exemple asservie pour imposer au moteur une vitesse constante.

Pour assurer le maintien à la tension neutre du noeud N commun aux différents bobinages $B_1$ à $B_3$, il est prévu que ce noeud commun N est relié au neutre par l'intermédiaire d'une impédance $Z_0$.

On rappelle à cet égard que pour l'alimentation d'un moteur électrique de motoventilateur d'un véhicule automobile, la tension neutre correspond généralement à la tension de la batterie divisée par deux.

Pour maintenir ce point commun à la tension neutre, il peut être prévu en variante un montage hacheur de tension reliant alternativement ledit noeud commun N d'une part à la masse et d'autre part à la tension de la batterie.

Le maintien à la tension neutre du noeud N commun aux différents bobinages Bi, dans le cas d'un montage en étoile, permet d'imposer au système une contrainte qui évite que l'on atteigne les zones de fonctionnement où les générateurs de courant $GI_i$ ne travaillent plus correctement.

En variante encore, et éventuellement de façon complémentaire à l'une ou l'autre des deux solutions précédentes, il peut être prévu de corriger les signaux de consigne en sortie des trois multiplicateurs $Mult_1$ à $Mult_3$ par le courant résultant au point N en sortie des bobinages $B_1$ à $B_3$. Ce courant résultant est par exemple distribué de façon identique sur chacune des sorties des multiplicateurs $Mult_1$ à $Mult_3$, après avoir été le cas échéant traité par un filtre de stabilisation G.

De cette façon, les boucles du dispositif réagissent pour maintenir le courant en sortie au niveau de leur noeud commun N autour d'une valeur nulle.

De façon générale, en effet (cas d'un montage en étoile ou d'un montage en triangle), on montre que si les bobines du stator sont symétriques, on a :

$$\Sigma Ii_{mesuré} = 0$$

et

$$\overrightarrow{E} = \overrightarrow{V} - Z\overrightarrow{I}_{mesuré} - \frac{1}{n}\Sigma Vi \begin{pmatrix} 1 \\ \vdots \\ 1 \end{pmatrix}$$

Toutefois, dans la pratique, du fait des calculs et des incertitudes (tolérances) sur la commande :

$$\Sigma I_{consigne} = \varepsilon \neq 0$$

Les tensions Vi aux bornes des différents bobinages du moteur ont donc tendance à varier de façon croissante si $\varepsilon > 0$, et de façon décroissante si $\varepsilon < 0$.

C'est pourquoi il est nécessaire d'asservir la quantité : $\frac{1}{n}\Sigma Vi$,

par exemple, en la maintenant à la tension neutre ce qui se fait aisément, ainsi que cela ressort de ce qui précède, dans le cas d'un montage en étoile.

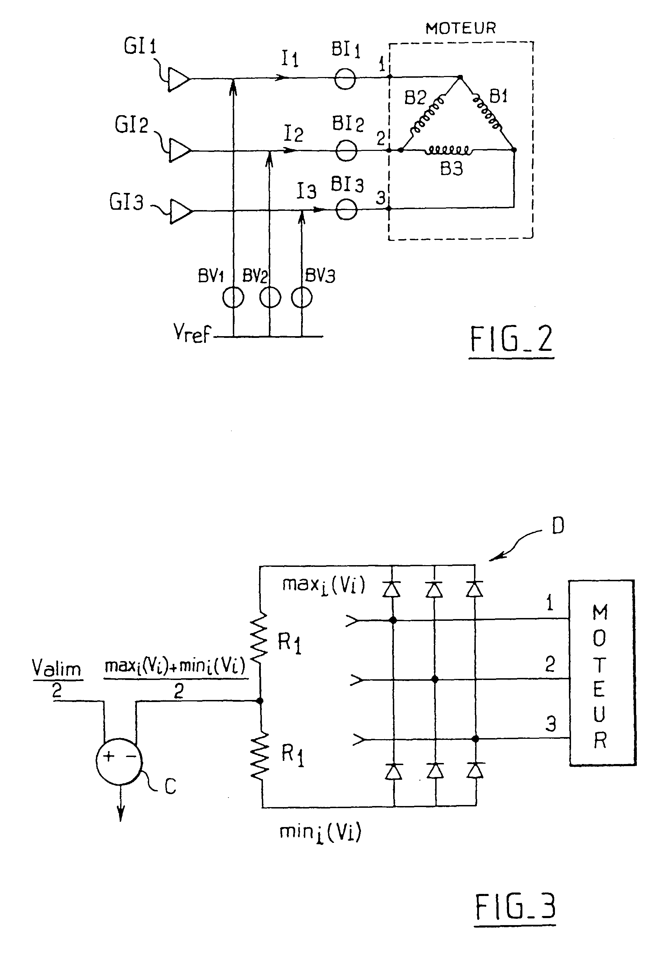

On a illustré sur la figure 2 le montage triangle équivalent au montage étoile de la figure 1.

Dans ce montage, les tensions $V_1$, $V_2$ et $V_3$ sont mesurées par les moyens $BV_1$, $BV_2$ et $BV_3$ respectivement au noeud commun entre $B_1$ et $B_2$, au noeud commun entre $B_2$ et $B_3$ et au noeud commun entre $B_3$ et $B_1$.

On a représenté sur la figure 3 un montage permettant d'imposer une contrainte asservissant une grandeur similaire à $\frac{1}{n}\Sigma Vi$ à la tension neutre.

Ce montage comporte un pont redresseur D monté sur les différents noeuds 1 à 3 des bobinages du stator.

Les tensions aux deux extrémités de ce pont redresseur correspondent respectivement à $max_i(Vi)$ et $min_i(Vi)$.

Ces deux extrémités sont reliées par l'intermédiaire de deux résistances $R_1$ équilibrées à un point commun qui est par conséquent à la tension

$$(max_i(Vi) + min_i(Vi))/2.$$

La tension en ce point commun est injectée, avec la tension Valim/2 en entrée d'un comparateur C dont la sortie commande les différents générateurs d'intensité $GI_1$ à $GI_3$, de façon, en ajoutant ou retranchant du courant, à asservir la quantité $(max_i(Vi) + min_i(Vi))/2$ sur Valim/2, c'est-à-dire sur la tension neutre (6 Volts).

Avec un dispositif du type de celui qui vient d'être décrit, les vecteurs $\vec{E}$ et $\vec{I}$ sont en permanence parallèles, sans qu'une synchronisation de la commande par rapport à la rotation du rotor du moteur ne soit nécessaire.

Par ailleurs, l'asservissement réalisé est particulièrement stable, notamment en température.

Notamment, les coefficients de self-inductance et d'inductance mutuelle qui interviennent dans les boucles varient peu.

Les coefficients résistifs sont eux susceptibles de varier en température, mais leur variation ne fait qu'introduire sur le vecteur $\vec{E}$ une variation qui est proportionnelle au vecteur $\vec{I}$ de sorte que ces deux vecteurs restent proportionnels.

Bien évidemment, il faut adjoindre un dispositif de séquencement ("en aveugle" ou utilisant des capteurs de position du rotor) pour démarrer le moteur jusqu'à une vitesse suffisante pour que les forces électromotrices mesurées Ei soient significatives.

**Revendications**

1. Dispositif de commande d'un moteur électrique, notamment de groupe motoventilateur de véhicule automobile présentant plusieurs phases, caractérisé en ce que les différents bobinages d'induit ($B_1$ à $B_3$) qui correspondent à ces différentes phases sont alimentées par des générateurs de courant ($GI_1$ à $GI_3$) et en ce que pour la commande de ces générateurs de courant ($GI_1$ à $GI_3$), il comporte des moyens ($BV_1$ à $BV_3$) pour la mesure des tensions aux bornes de ces différents bobinages ($B_1$ à $B_3$), des moyens ($BI_1$ à $BI_3$) pour la mesure des intensités des courants qui traversent ces différents bobinages ($B_1$ à $B_3$), et des moyens pour la détermination, en fonction de ces mesures, de signaux de consigne appliqués aux entrées de commande des générateurs de courant ($GI_1$ à $GI_3$), tels que le vecteur défini par les intensités des courants générés par lesdits générateurs de courant ($GI_1$ à $GI_3$) est proportionnel au vecteur $\vec{V}$-$Z\vec{I}$, où $\vec{V}$ est un vecteur défini par les différentes tensions ($V_1$ à $V_3$) mesurées pour les différents bobinages, $\vec{I}$ un vecteur défini par les différentes intensités de courant ($I_1$ à $I_3$) mesurées pour les différents bobinages ($B_1$ à $B_3$), et Z un opérateur correspondant à l'impédance des bobinages ($B_1$ à $B_3$).

2. Dispositif selon la revendication 1, caractérisé en ce qu'il comporte des moyens pour asservir à un paramètre donné le coefficient de proportionnalité (K) entre le vecteur constitué par les différentes intensités des courants générés par les générateurs ($GI_1$ à $GI_3$) et le vecteur $\vec{V}$- $Z\vec{I}$.

3. Dispositif selon la revendication 2, caractérisé en ce qu'il comporte des moyens pour asservir ce coefficient de proportionnalité (K) en fonction de la vitesse du rotor du moteur.

4. Dispositif selon l'une des revendications précédentes, caractérisé en ce que dans le cas où les bobinages ($B_1$ à $B_3$) sont montés en étoile, leur noeud commun (N) est relié à un point neutre par l'intermédiaire d'une impédance ($Z_0$).

5. Dispositif selon l'une des revendications précédentes, caractérisé en ce que dans le cas où les bobinages ($B_1$ à $B_3$) sont montés en étoile, les signaux de consigne sont corrigés par un signal correspondant à l'intensité du courant en sortie des bobinages, au niveau du noeud commun auxdits bobinages, les boucles de réaction ainsi réalisées permettant de maintenir ladite intensité de courant au voisinage d'une valeur nulle.

6. Dispositif selon l'une des revendications précédentes, caractérisé en ce que dans le cas où les bobinages sont montés en étoile, les moyens ($B_1$ à $B_3$) pour la mesure des intensités des courants qui traversent les différents bobinages sont situés sur les branches des différents bobinages du côté opposé aux générateurs de courant ($GI_1$ à $GI_3$).

7. Dispositif selon l'une des revendications précédentes, caractérisé en ce que les moyens pour la détermination des signaux de consigne comportent des amplificateurs opérationnels, qui constituent des opérateurs différentiels (d/dt) et un sommateur (S).

8. Dispositif selon l'une des revendications précédentes, caractérisé en ce que les moyens ($BV_1$ à $BV_3$) pour la mesure des tensions aux bornes des bobinages comportent des amplificateurs différentiels.

9. Dispositif selon l'une des revendications précédentes, caractérisé en ce que les moyens pour la mesure des intensités des courants qui traversent les bobinages comportent des dérivations de type shunt aux bornes desquelles une tension représentative du courant est mesurée, ou encore des sondes effet Hall.

FIG_1

FIG_2

FIG_3

Office européen des brevets    **RAPPORT DE RECHERCHE EUROPEENNE**    Numéro de la demande  
EP 97 40 2260

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | SASO VLAHU: "NEW BRUSHLESS AC SERVO DRIVE USES ISOLATED GATE BIOPOLAR POWER TRANSISTORS AND A CPU TO OBTAIN HIGH DYNAMIC PERFORMANCE WITH EXCEPTIONALLY HIGH RELIABILITY AND EFFICIENCY" 7 octobre 1990 . CONFERENCE RECORD OF THE INDUSTRY APPLICATIONS SOCIETY ANNUAL MEETI, SEATTLE, OCT. 7 - 12, 1990, VOL. VOL. 1, NR. MEETING 25, PAGE(S) 685 - 690 , INSTITUTE OF ELECTRICAL AND ELECTRONICS ENGINEERS XP000204096 * page 686 - page 687 * | 1 | H02P6/08 |
| A | WO 88 00771 A (VENTURINO GIANFRANCO GSE) 28 janvier 1988 * page 2, ligne 3 - ligne 19; figure 1 * | 1,8,9 | |

| DOMAINES TECHNIQUES RECHERCHES (Int.Cl.6) |
|---|
| H02P |

Le présent rapport a été établi pour toutes les revendications

| Lieu de la recherche | Date d'achèvement de la recherche | Examinateur |
|---|---|---|
| LA HAYE | 9 décembre 1997 | Bourbon, R |

CATEGORIE DES DOCUMENTS CITES

X : particulièrement pertinent à lui seul  
Y : particulièrement pertinent en combinaison avec un autre document de la même catégorie  
A : arrière-plan technologique  
O : divulgation non-écrite  
P : document intercalaire

T : théorie ou principe à la base de l'invention  
E : document de brevet antérieur, mais publié à la date de dépôt ou après cette date  
D : cité dans la demande  
L : cité pour d'autres raisons

& : membre de la même famille, document correspondant